(19) Europäisches Patentamt
European Patent Office
Office européen des brevets

(11) Publication number: **0 019 637**
**B1**

(12) # EUROPEAN PATENT SPECIFICATION

(45) Date of publication of patent specification: **08.06.83**

(51) Int. Cl.³: **C 08 F 10/00, C 08 F 4/62**

(21) Application number: **79900930.3**

(22) Date of filing: **08.08.79**

(86) International application number: **PCT/JP79/00209**

(87) International publication number: **WO 80/00347 06.03.80 Gazette 80/5**

(54) **PROCESS FOR PRODUCING OLEFIN POLYMER.**

(30) Priority: **09.08.78 JP 97119/78**
**10.04.79 JP 43228/79**

(43) Date of publication of application: **10.12.80 Bulletin 80/25**

(45) Publication of the grant of the patent: **08.06.83 Bulletin 83/23**

(84) Designated Contracting States: **DE FR GB NL**

(56) References cited:
**WO - A - 80/01485**
**GB - A - 1 187 466**
**JP - A - 49 034 992**
**JP - B - 35 015 352**
**US - A - 4 154 701**

(73) Proprietor: **MITSUBISHI CHEMICAL INDUSTRIES LIMITED**
**5-2, Marunouchi 2-chome Chiyoda-ku**
**Tokyo 100 (JP)**

(72) Inventor: **TANAKA, Toru**
**922, Inokata**
**Komae-shi, Tokyo 201 (JP)**
Inventor: **TANAKA, Eiji**
**10-39, Saginuma 2-chome Takatsu-ku**
**Kawasaki-shi Kanagawa 213 (JP)**

(74) Representative: **Baillie, Iain Cameron**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 019 637 B1

# Process for producing olefin polymer

This invention relates to a process for the preparation of olefin polymers, and more particularly it relates to a process for preparing olefin polymers by using a novel catalyst containing a titanium compound, a vanadium compound and a zirconium or hafnium compound.

## Background of the invention

It is known in the art to polymerize an $\alpha$-olefin such as ethylene by using a so-called Ziegler catalyst composed of a transition metal compound and an organoaluminum compound. For instance, Japanese Patent Publication No. 11269/74 proposes a catalyst system comprising an organoaluminum compound and an eutectic obtained by reducing a mixture of a tetravalent titanium halide and an oxyalkoxide of vanadium or a reaction product thereof with an organoaluminum compound. The polymers obtained from use of such catalyst system have some prominent advantages for polymer production, such as limited particle size distribution and high bulk specific gravity. Such polymers, however, are restricted in molecular weight distribution, so that these polymers, although applicable for injection molding, were not suited for the applications where a broad molecular weight distribution is required, such as extrusion molding or blow molding. Similarly U.K. Patent Specification 1187466 while mentioning a number of components exemplifies catalysts from only three components (Ti, V, Al). The polymers illustrated have a narrow molecular weight distribution. There is no suggestion that a specific catalyst could provide a broad molecular weight distribution.

As a result of further studies, the present inventors found that it is possible to obtain a catalyst system that allows easy control of the molecular weight distribution of the produced olefin polymer by using a zirconium or hafnium compound in addition to the titanium and vanadium compounds in preparation of the solid catalyst composition. This invention was reached on the basis of such novel finding.

## Detailed description of the invention

This invention may be condensed to a process for the preparation of olefin polymers characterized in that an olefin is polymerized by using a catalyst which comprises, in combination, an organoaluminum compound and a solid catalyst composition obtained by reacting:

(A) a titanium compound selected from the organic oxygenated compounds and halogenated compounds of titanium;
(B) a vanadium compound selected from the organic oxygenated compounds and halogenated compounds of vanadium;
(C) at least one compound selected from the organic oxygenated compounds of zirconium, halogenated compounds of zirconium, organic oxygenated compounds of hafnium and halogenated compounds of hafnium (such at least one compound is hereinafter referred to simply as zirconium or hafnium compound); and
(D) an organoaluminum compound which, if component C is solely a zirconium compound, is an organoaluminum bromide.

The invention is now described in detail.

The titanium compound, vanadium compound and zirconium or hafnium compound used for the preparation of the solid catalyst composition in this invention are selected from the organic oxygenated and halogenated compounds of the respective metals. The term "organic oxygenated compound of metals" is used in this specification to refer to those compounds which have at least one metal-oxygen-organic group bond in each molecule. Such compounds include the condensation compounds having the metal-oxygen-metal type bonds if such condensation compounds have at least one metal-oxygen-organic group bond per one molecule. The organic group in said bond may be of any suitable type, but usually it is desirable to use a group having 1 to 20 carbon atoms, more preferably a hydrocarbon group such as alkyl group, cycloalkyl group, aryl group, alkylaryl group or arylalkyl group. The term "halogenated compounds of metals" refers to the compounds having at least one metal-halogen bond per molecule. Such compounds may be the condensation compounds having the metal-oxygen-metal type bonds provided that such compounds have at least one metal-halogen bond for every molecule. The halogen atom in such bond may be fluorine, chlorine, bromine or iodine, of which bromine or chlorine is preferred. Among such organic oxygenated compounds and halogenated compounds, most preferred for use in this invention are the compounds which are represented by the following general formula: $[M_eO_a(OR)_bX_c]_d$ (wherein R is an organic group such as mentioned above, X is a halogen atom mentioned above, $M_e$ is titanium, vanadium, zirconium or hafnium, a is a number defined by $0 \leqq a \leqq 1$, b and c are numbers defined by $0 \leqq b \leqq 5$ and $0 \leqq c \leqq 5$, but $a \times 2 + b + c$ is equal to the valence of each said metal, and d is an integer defined by $1 \leqq d \leqq 6$.

The titanium compound in the solid catalyst composition used in this invention is preferably selected from the tetravalent titanium compounds represented by the general formula:

$[TiO_{a1}(OR^1)_{b1}X^1_{c1}]_{d1}$ (wherein $a^1$, $b^1$ and $c^1$ are the numbers defined by $0 \leqq a^1 \leqq 1$, $0 \leqq b^1 \leqq 4$, $0 \leqq c^1 \leqq 4$, and $a^1 \times 2 + b^1 + c^1 = 4$, $d^1$ is an integer defined by $1 \leqq d^1 \leqq 6$, $R^1$ is an alkyl group having 1 to 20 carbon atoms, a cycloalkyl group, an aryl group, an alkylaryl group or an arylalkyl group, and $X^1$ is a halogen atom), most preferred among which are the tetravalent titanium compounds represented by the general formula: $Ti(OR^2)_{a2}X_{4-22}$ (wherein $a^2$ is a number defined by $0 \leqq a^2 \leqq 4$, and $R^2$ and $X^2$ have the same meaning as above-defined $R^1$ and $X^1$). Bromine is most preferred for the halogen atom in the above formula. Examples of these compounds are alkoxides such as $Ti(OC_2H_5)_4$ or $Ti(O\text{-}n\text{-}C_4H_9)_4$; phenoxides such as $Ti(OC_6H_5)_4$; oxyalkoxides such as $TiO(OC_2H_5)_2$; condensed alkoxides such as $Ti_2O(O\text{-}i\text{-}C_3H_7)_6$; tetrahalides such as $TiCl_4$ or $TiBr_4$; oxyhalides such as $TiOCl_2$ or $TiOBr_2$, and halogenated alkoxides such as

$$Ti(OC_2H_5)_2Cl_2,$$

$$Ti(OC_2H_5)_2Br_2,$$

$$Ti(O\text{-}n\text{-}C_4H_9)_3Br$$

or

$$Ti(O\text{-}n\text{-}C_4H_9)_3Cl.$$

There may be used the complexes of these compounds and various kinds of Lewis bases, such as

$$TiBr_4\text{-}2(\text{butylether})$$

or

$$TiBr_3(O\text{-}n\text{-}C_4H_9)$$

ethyl acetate. It is also possible to use the compounds containing some different organic groups or halogen atoms, or some different titanium compounds.

The vanadium compound used in the solid catalyst composition of this invention is preferably selected from the tetravalent or pentavalent vanadium compounds represented by the general formula:

$$[VO_{a3}(OR^3)_{b3}X^3_{c3}]_{d3}$$

(wherein $a^3$, $b^3$ and $c^3$ are the numbers defined by $0 \leqq a^3 \leqq 1$, $0 \leqq b^3 \leqq 5$ and $0 \leqq c^3 \leqq 5$, and $a^3 \times 2 + b^3 + c^3$ is equal to the valence of vanadium, $d^3$ is an integer defined by $1 \leqq d^3 \leqq 6$, and $R^3$ and $X^3$ are same as $R^1$ and $X^1$ defined above), of which the pentavalent vanadium compounds of the formula:

$$VO(OR^4)_{a4}X^4_{3-a4}$$

(wherein $a^4$ is a number defined by $0 \leqq a^4 \leqq 3$, and $R^4$ and $X^4$ are same as $R^1$ and $X^1$, respectively) or the tetravalent vanadium compounds of the formula:

$$V(OR^4)_{b4}X^4_{4-b4}$$

(wherein $b^4$ is a number defined by $0 \leqq b^4 \leqq 4$, and $R^4$ and $X^4$ are same as defined above) are preferred. The halogen atom is preferably chlorine or bromine. Examples of these compounds are oxyalkoxides such as

$$VO(O\text{-}n\text{-}C_4H_9)_3$$

or

$$VO(OC_2H_5)_3;$$

oxyhalides such as $VOCl_3$ or $VOBr_3$; oxyphenoxides such as

$$VO(OC_6H_5)_3;$$

oxyalkoxyhalides such as

$$VO(OC_2H_5)_2Br,$$

$$VO(O\text{-}n\text{-}C_4H_9)_2Br,$$

$$VO(OC_2H_5)_2Cl$$

$$VO(O\text{-}n\text{-}C_4H_9)_2Cl$$

or

$$VO(O\text{-}n\text{-}C_4H_9)Br_2;$$

and tetrahalides such as $VBr_4$ or $VCl_4$.

There may be employed the complexes with various kinds of Lewis bases such as $VBr_4 \cdot 2$ (butyl ether). It is also possible to use the compounds containing some different organic groups or halogen atoms, or some different vanadium compounds in combination.

The zirconium compound in said solid catalyst composition is preferably selected from the tetravalent zirconium compounds represented by the general formula:

$$[ZrO_{a5}(OR^5)_{b5}X^5_{c5})_{d5}$$

(wherein $a^5$, $b^5$ and $c^5$ are the numbers defined by $0 \leqq a^5 \leqq 1$, $0 \leqq b^5 \leqq 4$ and $0 \leqq c^5 \leqq 4$, and $a^5 \times 2 + b^5 + c^5 = 4$, $d^5$ is an integer of $1 \leqq d^5 \leqq 6$, and $R^5$ and $X^5$ have the same meaning as $R^1$ and $X^1$ defined above, respectively), but most preferred are those tetravalent zirconium compounds which are represented by the general formula:

$$Zr(OR^6)_{a6}X^6_{4-a6}$$

(wherein $a^6$ is a number defined by $0 \leqq a^6 \leqq 4$, and $R^6$ and $X^6$ are same as $R^1$ and $X^1$, respectively). Chlorine or bromine is preferred as halogen in the above formula. Examples of such compounds are alkoxides such as

$$Zr(O\text{-}n\text{-}C_4H_9)_4$$

or

$$Zr(OC_2H_5)_4;$$

phenoxides such as

$$Zr(OC_6H_5)_4;$$

alkoxyhalides such as

$$Zr(O\text{-}n\text{-}C_4H_9)_3Cl,$$

$$Zr(O\text{-}n\text{-}C_4H_9)_3Br$$

or

$$Zr(O\text{-}n\text{-}C_4H_9)_2Br_2;$$

tetrahalides such as $ZrCl_4$ or $ZrBr_4$; and oxyhalides such as $ZrOBr_2$ (this compound is usually used in the form of

$$ZrOBr_2 \cdot 8H_2O).$$

The complexes with various kinds of Lewis bases such as $ZrCl_4 \cdot 2$ (ethyl acetate) may be used. It is also possible to use the compounds containing some different organic groups or halogen atoms, or some different zirconium compounds in combination.

The hafnium compound is preferably selected from the tetravalent hafnium compounds represented by the general formula:

$$[Hf \cdot O_{a7}(OR^7)_{b7}X^7_{c7}]_{d7}$$

(wherein $a^7$, $b^7$ and $c^7$ are the numbers defined by $0 \leqq a^7 \leqq 1$, $0 \leqq b^7 \leqq 4$ and $0 \leqq c^7 \leqq 4$, and $a^7 \times 2 + b^7 + c^7 = 4$, $d^7$ is an integer of $1 \leqq d^7 \leqq 6$, and $R^7$ and $X^7$ have the same meaning as above-defined $R^1$ and $X^1$, respectively), but most preferred are those tetravalent hafnium compounds which are represented by the general formula:

$$Hf(OR^8)_{a8}X^8_{4-a8}$$

(wherein $a^8$ is a number defined by $0 \leqq a^8 \leqq 4$, and $R^8$ and $X^8$ are same as $R^1$ and $X^1$, respectively). The halogen atom in such formula is preferably chlorine or bromine. Examples of such compounds are alkoxides such as

$$Hf(O\text{-}n\text{-}C_4H_9)_4$$

or

$$Hf(OC_2H_5)_4;$$

phenoxides such as

$$Hf(OC_6H_5)_4$$

alkoxyhalides such as

$$Hf(O\text{-}n\text{-}C_4H_9)_3Cl$$

or

$$Hf(O\text{-}n\text{-}C_4H_9)_2Br_2;$$

tetrahalides such as $HfCl_4$ or $HfBr_4$; and oxyhalides such as $HfOCl_2$ (this compound is usually used in the form of

$$HfOCl_2 \cdot 8H_2O).$$

There may be used the complexes with various kinds of Lewis bases such as $HfBr_4 \cdot 2$ (ethyl acetate). It is also possible to use the compounds containing some different organic groups or halogen atoms, or some different hafnium compounds in combination.

Thus, the solid catalyst component in this invention can be obtained by reacting said titanium, vanadium and zirconium or hafnium compounds with an organoaluminum compound. The organoaluminum compound used in such reaction is preferably selected from the aluminum compounds represented by the general formula: $AlR^9_nX^9_{3-n}$ (wherein $R^9$ is a hydrocarbon group having 1 to 20 carbon atoms, preferably 1 to 6 carbon atoms, $X^9$ is a halogen atom, and n is a number defined by $0 \leq n \leq 3$). Preferably, $R^9$ is selected from the alkyl, cycloalkyl, aryl, arylalkyl and alkylaryl groups. $X^9$ is chlorine, bromine, iodine or such. Examples of such compounds are $Al(C_2H_5)_3$, $Al(C_2H_5)_2Cl$, $Al_2(C_2H_5)Cl_3$ and $Al(C_2H_5)_2Cl$. It is possible to use some different organoaluminum compounds in combination or the organoaluminum compounds containing some different organic groups or halogen atoms, or to use an aluminum trihalide and an organoaluminum compound in combination.

The most preferred example of such organoaluminum compounds is brominated organoaluminum compound. This is because a high molecular weight regulating effect is provided by hydrogen when the polymerization is carried out by using a solid catalyst composition prepared by using a brominated organoaluminum compound, allowing presence of hydrogen in the polymerization reaction zone. Such brominated organoaluminum compound is preferably selected from those aluminum compounds which are represented by the general formula:

$$AlR^{10}_mBr_{3-m}$$

(wherein $R^{10}$ is a hydrocarbon group having 1 to 20, preferably 1 to 6 carbon atoms, and m is a number defined by $0 \leq m \leq 3$). $R^{10}$ is preferably selected from the alkyl, cycloalkyl, aryl, arylalkyl and alkylaryl groups. Examples of such compounds are

$$Al(CH_3)Br_2,$$

$$Al(C_2H_5)Br_2,$$

$$Al(i\text{-}C_4H_9)Br_2,$$

$$Al(n\text{-}C_8H_{17})Br_2,$$

$$Al(C_2H_5)Br,$$

$$Al(C_2H_5)_2Br,$$

$$(CH_3)_{1.5}AlBr_{1.5}$$

and

$$(C_2H_5)_{1.5}AlBr_{1.5}.$$

Most preferred among them are dibrominated organoaluminum compounds such as

$$Al(C_2H_5)Br_2$$

and

$$Al(CH_3)Br_2.$$

The reaction may be accomplished by adding and mixing the respective component materials in a suitable order. For instance, a titanium compound, a vanadium compound and a zirconium or hafnium compound are first mixed and then an organoaluminum compound is added to said mixture or the reaction product thereof. More definitely, first a titanium compound, a vanadium compound and a zirconium or hafnium compound are mixed. Both a zirconium compound and a hafnium compound may be used in combination. The order of addition of said respective compounds may be suitably selected. Reactions may be induced between the respective compounds after mixing. The temperature used in said addition operation is not subject to any specific condition; such operation may be performed at 0 to 200°C, usually at normal temperature. Pressure is also not a critical condition; the operation may be practiced under normal pressure. Mixing may be accomplished either in the presence or in the absence of a diluent, but the mixture should preferably be of a liquid state (it may be in the form of a slurry). Therefore, in case the compounds themselves are not liquid under the mixing condition or the amount of the liquid compound(s) is insufficient, it is recommended to add a diluent. All types of ordinary inert

hydrocarbon solvents may be used as diluent for said purpose, but it is desirable to use the $C_{6-20}$ alkanes, cycloalkanes and aromatic hydrocarbons, such as for example hexane, heptane, cyclohexane, benzene, toluene and xylene. It is also possible to use a polar solvent such as ethylene dichloride, $C_{1-8}$ alcohols carboxylic acid esters, ethers and pyridine. Addition of said titanium, vanadium and zirconium or hafnium compounds may be effected in the form of a solution of said inert hydrocarbon solvent or polar solvent.

The thus obtained mixture of the titanium, vanadium and zirconium or hafnium compounds or the reaction product thereof is reacted with an organoaluminum compound to prepare a solid catalyst composition. The reaction with the organoaluminum compound is preferably carried out in the presence of an inert solvent even when said mixture or reaction product retains a sufficient liquid state in the absence of a diluent. Usually, inert hydrocarbon solvents such as cited above as examples of diluent are used as inert solvent in said reaction. In case of using a polar solvent in said mixing, such polar solvent may be either removed, by distillation under reduced pressure or other means, prior to the reaction with the organoaluminum compound or may be allowed to stay in the reaction with the organoaluminum compound.

The reaction with the organoaluminum compound is accomplished by adding an organoaluminum compound to the inert solvent added mixture of said titanium, vanadium and zirconium or hafnium compounds or the reaction product thereof, preferably at room temperature to 200°C, most preferably at 50 to 150°C. This reaction gives a solid product which is insoluble in the insert solvent, so such solid product is preferably separated and washed with an inert solvent. If desired, said product may not be separated but immediately subjected to use.

Alternatively, first a vanadium compound and a zirconium or hafnium compound are added and mixed, and to this mixture is added an organoaluminum compound in the presence of an inert solvent to effect a reaction, followed by addition of a titanium compound, and preferably the solid product is separated from the reaction mixture. The reaction conditions are same as said above.

The amounts of the respective compounds to be mixed are preferably selected such that the ratio of the total amount t, as expressed in terms of gram equivalents, of the respective metals in the titanium, vanadium and zirconium or hafnium compounds to the total amount u, as expressed in terms of gram equivalents, of the respective halogen atoms in said compounds will be $u/t>0.6$, preferably $u/t>1$. Here, gram equivalent=gram atoms of the element/valence of the element. If $u/t>0.6$, it becomes easier to produce a polymer with a broad molecular weight distribution. There is no definite upper limit to the value of u/t, but usually, the u/t value of up to about 10 suffices. In case of using organoaluminum bromide, the amounts of other halogens are desirably such that their molar ratio to bromine will be greater than 10. As for the amounts (as expressed in terms of gram atoms) of the respective metals of titanium, vanadium and zirconium or hafnium, they are preferably selected such that the following relations will be satisfied:

$$0.1<(\text{Zr or Hf})/\text{Ti}<10$$

and

$$0.01<(\text{Zr or Hf}+\text{Ti})/\text{V}<100,$$

more preferably

$$0.2<(\text{Zr or Hf})/\text{Ti}<8$$

and

$$0.05<(\text{Zr or Hf}+\text{Ti})/\text{V}<10.$$

If the value of (Zr or Hf)/Ti is within the said range, it becomes particularly easy to produce a polymer with a wide molecular weight distribution by use of said catalyst system, and when the value of (Zr or Hf+Ti)/V is within the said range, there is provided particularly high polymerization activity of the catalyst system.

As regards the organoaluminum compounds used as co-catalyst in this invention, there may be employed the compounds represented by the general formula: $AlR^{11}_kX^{11}_{3-k}$ (wherein $R^{11}$ is an alkyl, aryl or cycloalkyl group, $X^{11}$ is a halogen atom, and k is a number of 1 to 3), a preferred example thereof being trialkylaluminum such as triethylaluminum, tri-n-propylaluminum or triisobutylaluminum.

As to the ratio between the solid catalyst composition insoluble in hydrocarbons and the organoaluminum compound to be mixed, they are usually mixed such that the Al/(V+Ti+Zr or Hf) atomic ratio will be within the range of 0.1 to 100, preferably 0.2 to 20.

An olefin is polymerized by using the thus prepared catalyst system. Among the olefins usable in the process of this invention are $\alpha$-olefins such as ethylene, propylene, butene-1, pentene-1 and octene-1. These olefins may be mixed and copolymerized. The process of this invention proves to be particularly suited for the preparation of ethylene homopolymers or ethylene copolymers containing up to 10 wt%, preferably up to 5 wt% of other $\alpha$-olefins. The polymerization reaction in the process of this invention may be accomplished by solution polymerization practiced in an inert solvent, slurry polymerization or vapor phase polymerization performed with no medium of solvent. Usually, such reaction is carried out in the presence of an inert solvent by supplying an olefin or an olefin mixture while maintaining both temperature and pressure within the predetermined ranges. Used as the inert

solvent in the reaction is an aliphatic hydrocarbon such as pentane, hexane, heptane, octane or isooctane, an alicyclic hydrocarbon such as cyclopentane or cyclohexane, or an aromatic hydrocarbon such as benzene or toluene. The temperature and pressure used for this polymerization reaction are usually selected from within the ranges of normal temperature to 200°C and normal pressure to 100 atm., respectively.

Also, in the process of this invention, if hydrogen is allowed to exist in the polymerization reaction zone, such hydrogen produces a marvelous effect in regulating the molecular weight, allowing easy obtainment of the polymer with a desired molecular weight. The amount of hydrogen allowed to exist varies depending on the polymerization conditions and other factors such as the desired molecular weight of the produced olefin polymer, so that it needs to suitably adjust the introduced amount of hydrogen to suit the situation. As said above, a particularly high molecular weight regulating effect by hydrogen is provided in case of using a solid catalyst composition prepared by using a brominated organoaluminum compound. For instance, for obtaining a polymer with melt index of 0.3 to 0.05 at polymerization temperature of 70°C by using a TiV-Zr catalyst, it suffices to add hydrogen in an amount of about 30 to 150 mol% based on ethylene, and for obtaining a polymer with melt index of 0.3 to 0.05 at polymerization temperature of 90°C by using a TiV-Hf catalyst, hydrogen may be added in an amount of approximately 50 to 150 mol% based on ethylene.

As described above, the process of this invention has the advantages that the catalyst system used in the reaction is high in activity and that the molecular weight distribution of the obtained polymer can be easily adjusted by changing the mixed proportions of the respective component compounds of the catalyst, and there can be consequently obtained the olefin polymers which have wide molecular weight distribution and excellent moldability in extrusion and blow molding works. Particularly, in the case of a solid catalyst composition prepared by using a hafnium compound, the catalyst system is prominently high in activity and the obtained polymers are excessively wide in molecular weight distribution.

Preferred embodiments of the invention:

The invention is now described in further detail by way of some examples thereof, but it will be apparent that this invention can as well be embodied in other forms without departing from the scope and spirit of the invention.

In the following descriptions of examples, the polymerization activity K of the catalyst was given by: K=(gr. of polymer)/(gr. of catalyst) (hr) (kg/cm$^2$ olefin pressure). The melt index (MI) was measured according to ASTM-D-1238-57T at 190°C under load of 2.16 kg. The flow ratio (FR) given as a measure of molecular weight distribution is a value showing shear stress dependency of melting viscosity and expressed by the ratio of melt index determined at shear stress of $10^6$ dyne/cm$^2$ and $10^5$ dyne/cm$^2$ (MI $10^6$/MI $10^5$) according to ASTM-D-1238-57T. It is considered that molecular weight distribution is wide when the value of FR is large.

Example 1:

(1) Preparation of solid catalyst composition

20 mmol of titanium tetra-normal-butoxide and 20 mmol of vanadyl tri-normal-butoxide were added into a 300 ml four-necked flask, followed by gradual addition of 19 mmol of hafnium tetrachloride under ice cooling. The mixture was stirred at 50°C for one hour to obtain a homogenous solution.

33 ml of benzene was then added into this homogeneous solution, and after increasing the temperature to 60°C, 277 mmol of ethylaluminum dibromide was added in the form of a 55 vol% benzene solution, followed by one-hour agitation at 65°C. The produced precipitate was washed with normal hexane and then dried to obtain catalyst powder.

(2) Polymerization of ethylene

20 mg of said catalyst powder was fed into a 2-litre autoclave which contained 1,000 cc of n-hexane.

After elevating the temperature to 90°C, hydrogen was introduced at the rate of 6.5 kg/cm$^2$, followed by further introduction of 0.08 mmol of triisobutylaluminum together with ethylene. Ethylene absorption was seen upon introduction of ethylene, but ethylene was supplied additionally to maintain the total pressure at 15 kg/cm$^2$. The polymerization was stopped one hour later by feeding ethanol under pressure.

There was obtained 325 gr. of polymer with MI=0.080 g/min., FR=110 and K=2,110.

Examples 2—5:

Titanium tetra-normal-butoxide, vanadium tri-normal-butoxide and hafnium tetra-normal-butoxide were mixed in amounts shown in Table 1 below.

After adding benzene in amounts shown in Table 1, ethylaluminum dibromide was further added in amounts shown in Table 1 in the form of a 55 vol% benzene solution at 60°C, followed by one-hour agitation at 65°C.

The produced precipitate from each example was washed with normal hexane and dried to obtain catalyst powder.

Ethylene polymerization was carried out by using 20 mg of said powder in the completely same way as Example 1 except that hydrogen was introduced to pressures shown in Table 1. The results are shown in Table 1.

Examples 6—8:

Various titanium, vanadium and hafnium compounds were mixed in amounts shown in Table 1.

Generation of heat and a change of color tone took place simultaneously with said mixing in each example, particularly conspicuously in Examples 7 and 8, indicating occurence of reaction between the respective compounds.

After mixing, the mixture was stirred at 50°C for one hour, added with benzene in amounts shown in Table 1 and further added dropwise with ethylaluminum dibromide in amounts shown in Table 1 in the form of a 55 vol% benzene solution at 60°C, followed by one-hour stirring at 65°C. The resulting precipitate was washed with normal hexane and dried to obtain catalyst powder.

Ethylene polymerization was performed by using 20 mg of said powder in the same manner as Example 1 except that hydrogen was introduced to pressures shown in Table 1. The results are shown in Table 1.

Example 9:

A solid catalyst composition was prepared in the same way as Example 2 except for use of 400 mmol of ethylaluminum sesquibromide instead of 531 mmol of ethylaluminum dibromide.

Ethylene polymerization was carried out by using 20 mg of this solid catalyst composition in the same way as Example 1 except that hydrogen was introduced to pressure shown in Table 2, obtaining the results shown in Table 1.

Example 10:

Ethylene and butene-1 copolymerization was carried out after the manner of Example 1 by mixing butene-1 in ethylene such that the butene-1/ethylene molar ratio in the gaseous phase during the polymerization reaction would become 0.008.

The results are shown in Table 2. The obtained polymer was an ethylene-butene-1 copolymer containing 0.1 mol% of butene-1 units.

Examples 11—13:

Solid catalyst compositions were prepared in the same way as Examples 1, 2 and 10, respectively, except for use of ethylaluminum dichloride instead of ethylaluminum dibromide and change of hydrogen pressure during polymerization such as shown in Table 2, and the thus prepared catalyst compositions were subjected to a same polymerization reaction as described above, obtaining the results shown in Table 2.

In the following tables, $Ti(O\text{-}n\text{-}C_4H_9)_4$, $VO(O\text{-}n\text{-}C_4H_9)_3$ and $Hf(O\text{-}n\text{-}C_4H_9)_4$ represent titanium tetra-normal-butoxide, vanadium tri-normal-butoxide and hafnium tetra-normal-butoxide, respectively, $TiBr_4$, $HfBr_4$ and $HfCl_4$ represent titanium tetra-bromide, hafnium tetrabromide and hafnium tetrachloride, respectively, $HfCl_2(O\text{-}n\text{-}C_4H_9)_2 \cdot n\text{-}C_4H_9OH$ represents n-butanol addition compound of hafnium dichlorodi-normal-butoxide, $EtAlBr_2$ and $Et_3Al_2Br_3$ represent ethylaluminum dibromide and ethylaluminum sesquibromide, respectively, and $EtAlCl_2$ represents ethylaluminum dichloride.

TABLE 1

| Example no. | Titanium compound (mmol) | Vanadium compound (mmol) | Hafnium compound (mmol) | Benzene (ml) | Aluminum bromide compound (mmol) |
|---|---|---|---|---|---|
| 1 | $Ti(OnC_4H_9)_4$ 20 | $VO(OnC_4H_9)_3$ 20 | $HfCl_4$ 19 | 33 | $EtAlBr_2$ 277 |
| 2 | $Ti(OnC_4H_9)_4$ 20 | $VO(OnC_4H_9)_3$ 20 | $Hf(OnC_4H_9)_4$ 24 | 36 | $EtAlBr_2$ 531 |
| 3 | $Ti(OnC_4H_9)_4$ 20 | $VO(OnC_4H_9)_3$ 20 | $Hf(OnC_4H_9)_4$ 24 | 36 | $EtAlBr_2$ 413 |
| 4 | $Ti(OnC_4H_9)_4$ 20 | $VO(OnC_4H_9)_3$ 20 | $Hf(OnC_4H_9)_4$ 24 | 36 | $EtAlBr_2$ 166 |
| 5 | $Ti(OnC_4H_9)_4$ 20 | $VO(OnC_4H_9)_3$ 20 | $Hf(OnC_4H_9)_4$ 16 | 31 | $EtAlBr_2$ 459 |
| 6 | $Ti(OnC_4H_9)_4$ 20 | $VO(OnC_4H_9)_3$ 20 | $HfCl_2(OnC_4H_9)_2 \cdot nC_4H_9OH$ 20 | 33 | $EtAlBr_2$ 430 |
| 7 | $TiBr_4$ 20 | $VO(OnC_4H_9)_3$ 20 | $Hf(OnC_4H_9)_4$ 20 | 33 | $EtAlBr_2$ 275 |
| 8 | $Ti(OnC_4H_9)_4$ 20 | $VO(OnC_4H_9)_3$ 20 | $HfBr_4$ 24 | 36 | $EtAlBr_2$ 267 |

TABLE 1 (contd.)

| Example no. | Hf/Ti | $\frac{Ti+Hf}{V}$ | u/t | Hydrogen pressure ($kg/cm^2$) | Yield (g) | K | MI | FR |
|---|---|---|---|---|---|---|---|---|
| 1 | 0.95 | 1.95 | 2.46 | 6.5 | 325 | 2,110 | 0.080 | 110 |
| 2 | 1.2 | 2.2 | 3.85 | 7.1 | 265 | 1,870 | 0.035 | 99 |
| 3 | 1.2 | 2.2 | 3.0 | 7.1 | 285 | 2,010 | 0.07 | 101 |
| 4 | 1.2 | 2.2 | 1.2 | 6.0 | 213 | 1,300 | 0.62 | 61 |
| 5 | 0.8 | 1.80 | 3.76 | 4.9 | 391 | 2,100 | 0.080 | 75 |
| 6 | 1.0 | 2.0 | 3.46 | 7.1 | 278 | 1,960 | 0.13 | 108 |
| 7 | 1.0 | 2.0 | 2.42 | 6.5 | 290 | 1,880 | 0.060 | 96 |
| 8 | 1.2 | 2.2 | 2.28 | 7.1 | 277 | 1,950 | 0.11 | 100 |

TABLE 2

| Example no. | Titanium compound (mmol) | Vanadium compound (mmol) | Hafnium compound (mmol) | Benzene (ml) | Aluminum compound (mmol) |
|---|---|---|---|---|---|
| 9 | $Ti(OnC_4H_9)_4$ 20 | $VO(OnC_4H_9)_3$ 20 | $Hf(OnC_4H_9)_4$ 24 | 36 | $Et_3Al_2Br_3$ 400 |
| 10 | $Ti(OnC_4H_9)_4$ 20 | $VO(OnC_4H_9)_3$ 20 | $HfCl_4$ 19 | 33 | $EtAlBr_2$ 277 |
| 11 | $Ti(OnC_4H_9)_4$ 20 | $VO(OnC_4H_9)_3$ 20 | $HfCl_4$ 19 | 33 | $EtAlCl_2$ 277 |
| 12 | $Ti(OnC_4H_9)_4$ 20 | $VO(OnC_4H_9)_3$ 20 | $Hf(OnC_4H_9)_4$ 24 | 36 | $EtAlCl_2$ 531 |
| 13 | $Ti(OnC_4H_9)_4$ 20 | $VO(OnC_4H_9)_3$ 20 | $Hf(OnC_4H_9)_4$ 19 | 33 | $EtAlCl_2$ 277 |

TABLE 2 (contd.)

| Example no. | Hf/Ti | $\frac{Ti+Hf}{V}$ | u/t | Hydrogen pressure ($kg/cm^2$) | Yield (g) | K | MI | FR |
|---|---|---|---|---|---|---|---|---|
| 9 | 1.2 | 2.2 | 2.17 | 6.8 | 237 | 1,600 | 0.68 | 70 |
| 10 | 0.95 | 1.95 | 2.46 | 6.7 | 318 | 2,120 | 0.12 | 109 |
| 11 | 0.95 | 1.95 | 2.46 | 9.5 | 226 | 2,400 | 0.080 | 80 |
| 12 | 1.2 | 2.2 | 3.85 | 7.1 | 298 | 2,100 | 0.008 | — |
| 13 | 0.95 | 1.95 | 2.46 | 9.6 | 225 | 2,450 | 0.16 | 78 |

Examples 14—18:

(1) Preparation of catalyst

Titanium tetra-normal-butoxide, vanadyl tri-normal-butoxide, zirconium tetra-normal-butoxide dissolved in normal hexane (zirconium tetra-normal-butoxide was dissolved in the ratio of 10 mmol to 10 ml of normal hexane) and normal hexane were mixed in amounts shown in Table 3 to form homogenous solutions. To each of the thus prepared solutions was added dropwise ethylaluminum dibromide in amounts shown in Table 3 in the form of a 3.5 mol/l normal hexane solution at 60°C, followed by one-hour agitation at 65°C. The produced precipitates were washed with normal hexane and dried to obtain catalyst powder products.

(2) Polymerization of ethylene

20 mg of each said catalyst powder product was fed into a 1-litre autoclave which contained 500 cc of n-hexane. After elevating the temperature to 70°C, hydrogen was introduced to the predetermined pressures shown in Table 3, followed by further introduction of 0.4 mmol of triisobutylaluminum together with ethylene so that the total pressure became 15 $kg/cm^2$. Although ethylene absorption was noted upon ethylene introduction, ethylene was additionally supplied to maintain the total pressure at 15 $kg/cm^2$. The polymerization was stopped one hour later by feed of ethanol under pressure. The obtained results are shown in Table 3.

In the table, the amount of normal hexane is the sum of the amount of normal hexane in the zirconium tetrabutoxide and the additionally supplied amount of normal hexane.

Example 19:

A powdery catalyst was obtained in the same way as Example 14 except that zirconium normal butylate containing 14—16 wt% of commercially available normal butanol was used as zirconium compound and the amounts of the respective component compounds were changed as shown in Table 3.

Ethylene polymerization was conducted by using 20 mg of this powdery catalyst in the same way as Example 14 except for hydrogen introduction to 6.1 $kg/cm^2$, obtaining the results shown in Table 3.

Examples 20—22:

Various titanium, vanadium and zirconium compounds were mixed with normal hexane in amounts shown in Table 3.

In Examples 21 and 22, there took place generation of heat and a change of color tone simultaneously with mixing, indicating occurence of reaction between the compounds.

After mixing, the mixture was stirred at 60°C for 30 minutes and added dropwise with aluminum compounds shown in Table 3 in the form of a 3.5 mol/l normal hexane solution at 60°C, followed by one-hour agitation at 65°C. The produced precipitates were washed with normal hexane and dried to obtain powdery catalyst products.

Ethylene polymerization was carried out by using 20 mg of each said catalyst product in the same way as Example 14 except for hydrogen introduction to the pressures shown in Table 3, obtaining the results shown in Table 3.

Example 23:

Ethylene and butene-1 copolymerization was performed after the manner of Example 17 by mixing butene-1 when introducing and additionally supplying ethylene such that the butene-1/ethylene molar ratio in the gaseous phase during the polymerization reaction would become 0.009. The results are shown in Table 3. The obtained polymer was an ethylene-butene-1 copolymer containing 0.2 mol% of butene-1 units.

TABLE 3

| Example no. | Titanium compound (mmol) | Vanadium compound (mmol) | Zirconium compound (mmol) | Normal hexane (ml) | Aluminum compound (mmol) |
|---|---|---|---|---|---|
| 14 | $Ti(O\text{-}n\text{-}Bu)_4$ 20 | $VO(O\text{-}n\text{-}Bu)_3$ 20 | $Zr(O\text{-}n\text{-}Bu)_4$ 10 | 50 | $EtAlBr_2$ 315 |
| 15 | $Ti(O\text{-}n\text{-}Bu)_4$ 20 | $VO(O\text{-}n\text{-}Bu)_3$ 20 | $Zr(O\text{-}n\text{-}Bu)_4$ 20 | 60 | $EtAlBr_2$ 385 |
| 16 | $Ti(O\text{-}n\text{-}Bu)_4$ 20 | $VO(O\text{-}n\text{-}Bu)_3$ 20 | $Zr(O\text{-}n\text{-}Bu)_4$ 17 | 57 | $EtAlBr_2$ 260 |
| 17 | $Ti(O\text{-}n\text{-}Bu)_4$ 20 | $VO(O\text{-}n\text{-}Bu)_3$ 20 | $Zr(O\text{-}n\text{-}Bu)_4$ 17 | 57 | $EtAlBr_2$ 364 |
| 18 | $Ti(O\text{-}n\text{-}Bu)_4$ 20 | $VO(O\text{-}n\text{-}Bu)_3$ 40 | $Zr(O\text{-}n\text{-}Bu)_4$ 17 | 77 | $EtAlBr_2$ 469 |
| 19 | $Ti(O\text{-}n\text{-}Bu)_4$ 20 | $VO(O\text{-}n\text{-}Bu)_3$ 20 | $Zr(O\text{-}n\text{-}Bu)_4 \cdot BuOH$ 14 | 54 | $EtAlBr_2$ 343 |
| 20 | $Ti(O\text{-}n\text{-}Bu)_4$ 20 | $VO(O\text{-}n\text{-}Bu)_3$ 20 | $Zr(O\text{-}n\text{-}Bu)_4$ 17 | 57 | $Et_3Al_2Br_3$ 624 |
| 21 | $TiCl_4$ 20 | $VO(O\text{-}n\text{-}Bu)_3$ 20 | $Zr(O\text{-}n\text{-}Bu)_4$ 20 | 60 | $EtAlBr_2$ 345 |
| 22 | $Ti(O\text{-}n\text{-}Bu)_4$ 20 | $VO(O\text{-}n\text{-}Bu)_3$ 20 | $ZrBr_4$ 18 | 58 | $EtAlBr_2$ 335 |
| 23 | $Ti(O\text{-}n\text{-}Bu)_4$ 20 | $VO(O\text{-}n\text{-}Bu)_3$ 20 | $Zr(O\text{-}n\text{-}Bu)_4$ 17 | 57 | $EtAlBr_2$ 364 |

TABLE 3 (contd.)

| Example no. | Zr/Ti | Ti+Zr / V | u/t | Hydrogen pressure ($kg/cm^2$) | Yield (g) | K | MI | FR |
|---|---|---|---|---|---|---|---|---|
| 14 | 0.5 | 1.5 | 2.86 | 5.8 | 234 | 1,300 | 0.09 | 65 |
| 15 | 1.0 | 2.0 | 2.96 | 8.0 | 136 | 1,000 | 0.08 | 70 |
| 16 | 0.85 | 1.85 | 2.10 | 4.2 | 276 | 1,300 | 0.07 | 55 |
| 17 | 0.85 | 1.85 | 2.94 | 7.0 | 187 | 1,200 | 0.09 | 80 |
| 18 | 0.85 | 0.925 | 2.70 | 6.8 | 226 | 1,410 | 0.09 | 78 |
| 19 | 0.7 | 1.7 | 2.91 | 6.1 | 191 | 1,100 | 0.09 | 52 |
| 20 | 0.85 | 1.85 | 2.52 | 5.2 | 192 | 1,000 | 0.19 | 48 |
| 21 | 1.0 | 2.0 | 2.96 | 8.5 | 132 | 1,050 | 0.11 | 75 |
| 22 | 0.9 | 1.9 | 2.94 | 7.0 | 158 | 1,010 | 0.07 | 76 |
| 23 | 0.85 | 1.85 | 2.94 | 6.5 | 207 | 1,250 | 0.11 | 79 |

Industrial availability:

The process of this invention, as described above, is very useful for the preparation of the polyolefins, particularly polyethylene, used for extrusion or blow molding.

**Claims**

1. A process for the preparation of an olefin polymer having controllable and broad molecular weight distribution characterized in that an olefin is polymerized by using a catalyst comprising, in combination, an organoaluminum compound and a solid catalyst composition obtained by reacting:

(A) a titanium compound selected from the organic oxygenated and halogenized compounds of titanium,
(B) a vanadium compound selected from the organic oxygenated and halogenized compounds of vanadium,
(C) a hafnium compound selected from the organic oxygenated compounds of hafnium and halogenized compounds of hafnium, and
(D) an organoaluminum compound.

2. A process according to claim 1 wherein compound (C) also contains a zirconium compound selected from organic oxygenated compounds of zirconium and halogenized compounds of zirconium.

3. A process for the preparation of an olefin polymer having controllable and broad molecular weight distribution characterized in that an olefin is polymerized by using a catalyst comprising, in combination, an organoaluminum compound and a solid catalyst composition obtained by reacting:

(A) a titanium compound selected from the organic oxygenated and halogenized compounds of titanium,
(B) a vanadium compound selected from the organic oxygenated and halogenized compounds of vanadium,
(C) a zirconium compound selected from the organic oxygenated and halogenized compounds of zirconium, and
(D) an organoaluminum bromide.

4. A process for the preparation of an olefin polymer according to either of claims 1 and 2, wherein the organoaluminum compound (D) is selected from the organoaluminum compounds represented by the general formula: $AlR^9_nX^9_{3-n}$ (wherein $R^9$ is a hydrocarbon group having 1 to 20 carbon atoms, X is a halogen atom, and n is a number defined by $0<n\leq3$).

5. A process for the preparation of an olefin polymer according to any one of claims 1 and 2 and 4, wherein the organoaluminum compound (D) is an organoaluminum bromide compound.

6. A process for the preparation of an olefin polymer according to any one of the preceding claims,

wherein the organoaluminum compound (D) is selected from the organoaluminum bromide compounds represented by the general formula: $AlR^{10}_mBr_{3-m}$ (wherein $R^{10}$ is a hydrocarbon group having 1 to 20 carbon atoms, and m is a number defined by $0<m<3$).

7. A process for the preparation of an olefin polymer according to any of claims 1 to 6, wherein the solid catalyst composition is one prepared by adding and reacting the organoaluminum compound with a liquid material obtained by mixing or reacting a titanium compound, a vanadium compound and the zirconium or hafnium compound in the presence or absence of a diluent, and separating the solid catalyst composition from the resultant reaction mixture.

8. A process for the preparation of an olefin polymer according to any of claims 1 to 6, wherein the solid catalyst composition is one prepared by adding and mixing a vanadium compound and the zirconium or hafnium compound, further adding thereto the organoaluminum compound (D) in the presence of an inert solvent for reacting them, followed by addition of a titanium compound thereto, and separating the solid catalyst composition from the resultant reaction mixture.

9. A process for the preparation of an olefin polymer according to any of claims 1 to 6, wherein the solid catalyst composition is one obtained by reacting a titanium compound, a vanadium compound, the zirconium or hafnium compound and the organoaluminum compound (D) in such amounts that meet the condition of: $u/t>0.6$ (wherein u is the total sum, as expressed in terms of gram equivalents, of the halogen atoms in the titanium, vanadium, zirconium or hafnium, and organoaluminum compounds, and t is the total sum, as expressed in terms of gram equivalents, of the metal atoms in the titanium, vanadium and zirconium or hafnium compounds).

10. A process for the preparation of an olefin polymer according to any of claims 1 to 6, wherein the solid catalyst composition is one obtained by reacting a titanium compound, a vanadium compound, the zirconium or hafnium compound and an organoaluminum compound (D) by using them in such amounts that meet the conditions of $0.1<(Zr \text{ or } Hf)/Ti<10$ and $0.01<(Zr \text{ or } Hf+Ti)/V<100$ (wherein Ti, V and Zr or Hf represent the amounts of the titanium, vanadium and zirconium or hafnium atoms in the respective compounds as expresed in terms of gram equivalents).

11. A process for the preparation of an olefin polymer according to any of claims 1 to 6, wherein an olefin is polymerized in the presence of hydrogen.

12. A process for the preparation of an olefin polymer characterized in that an olefin is polymerized by using a catalyst comprising, in combination, a solid catalyst composition obtained by reacting:

(A) a titanium compound selected from the halogenated compounds and organic oxygenated compounds of titanium,
(B) a vanadium compound selected from the halogenated compounds and organic oxygenated compounds of vanadium,
(C) a hafnium compound selected from the halogenated compounds and organic oxygenated compounds of hafnium, and
(D) an organoaluminum bromide compound,

and an organoaluminum compound.

13. A process for the preparation of an olefin polymer according to any of claims 1 to 6 and 12, wherein the solid catalyst composition is one obtained by reacting a titanium compound, a vanadium compound, the zirconium or hafnium compound and an organoaluminum compound and separating the solid catalyst composition from the reaction mixture.

**Patentansprüche**

1. Verfahren zum Herstellen von Olefinpolymer mit einer steuerbaren, breiten Molekulargewichtsverteilung, dadurch gekennzeichnet, daß ein Olefin unter Verwendung eines Katalysators polymerisiert wird, der in Kombination eine aluminiumorganische Verbindung und eine feste Katalysatorzusammensetzung enthält, die erhalten worden ist durch Umsetzung:

(A) Einer Titanverbindung, die ausgewählt ist aus den sauerstoffhaltigen und halogenhaltingen, organischen Verbindungen des Titans,
(B) einer Vanadiumverbindung, die ausgewählt ist aus den sauerstoffhaltigen und halogenhaltigen organischen Verbindungen des Vanadiums,
(C) einer Hafniumverbindung, die ausgewählt ist aus den organischen sauerstoffhaltigen Verbindungen des Hafniums und den halogenhaltigen Verbindungen des Hafniums und
(D) einer aluminiumorganischen Verbindung.

2. Verfahren nach Anspruch 1, dadurch gekennzeichnet, daß die Verbindung (C) ferner eine Zirkoniumverbindung enthält, die ausgewählt ist aus den organischen sauerstoffhaltigen Verbindungen des Zirkoniums und den halogenhaltigen Verbindungen des Zirkoniums.

3. Verfahren zum Herstellen von Olefinpolymer mit einer steuerbaren, breiten Molekulargewichtsverteilung, dadurch gekennzeichnet, daß ein Olefin unter Verwendung eines Katalysators polymerisiert wird, der in Kombination eine aluminiumorganische Verbindung und eine feste Katalysatorzusammensetzung enthält, die erhalten worden ist durch Umsetzung:

(A) einer Titanverbindung, die ausgewählt ist aus den sauerstoffhaltigen und halogenhaltigen, organischen Verbindungen des Titans.
(B) einer Vanadiumverbindung, die ausgewählt ist aus den sauerstoffhaltigen und halogenhaltigen organischen Verbindungen des Vanadiums,
(C) einer Hafniumverbindung, die ausgewählt ist aus den organischen sauerstoffhaltigen Verbindungen des Hafniums und den halogenhaltigen Verbindungen des Hafniums und
(D) eines aluminiumorganischen Bromids.

4. Verfahren zum Herstellen von Olefinpolymer nach Anspruch 1 oder 2, dadurch gekennzeichnet, daß die aluminiumorganische Verbindung (D) ausgewählt ist aus den aluminiumorganischen Verbindungen der allgemeinen Formel $AlR^9{}_nX^9{}_{3-n}$, in der $R^9$ eine Kohlenwasserstoffgruppe mit 1 bis 20 Kohlenstoffatomen, X ein Wasserstoffatom und n eine Zahl ist, die definiert ist durch: $0<n\leqq 3$.

5. Verfahren zum Herstellen von Olefinpolymer nach einem der Ansprüche 1, 2 und 4, dadurch gekennzeichnet, daß die aluminiumorganische Verbindung (D) ein aluminiumorganisches Bromid ist.

6. Verfahren zum Herstellen von Olefinpolymer nach einem der vorhergehenden Ansprüche, dadurch gekennzeichnet, daß die aluminiumorganische Verbindung ausgewählt ist aus den aluminiumorganischen Bromverbindungen der allgemeinen Formel $AlR^{10}{}_mBr_{3-m}$, in der $R^{10}$ eine Kohlenwasserstoffgruppe mit 1 bis 20 Kohlenstoffatomen und m eine Zahl ist, die definiert ist durch: $0<m<3$.

7. Verfahren zum Herstellen von Olefinpolymer nach einem der Ansprüche 1 bis 6, dadurch gekennzeichnet, daß die feste Katalysatorzusammensetzung erhalten worden ist, indem zu einem flüssigen Gut, das erhalten worden ist durch Vermischen oder Umsetzen einer Titanverbindung, einer Vanadiumverbindung und der Zirkonium- oder Hafniumverbindung, die aluminiumorganische Verbindung bei Vorhandensein oder Nichtvorhandensein eines Verdünnungsmittels zugesetzt und mit dem flüssigen Gut umgesetzt und von dem so erhaltenen Reaktionsgemisch die feste Katalysatorzusammensetzung abgetrennt worden ist.

8. Verfahren zum Herstellen von Olefinpolymer nach einem der Ansprüche 1 bis 6, dadurch gekennzeichnet, daß die feste Katalysatorzusammensetzung erhalten worden ist, indem eine Vanadiumverbindung und die Zirkonium- oder Hafniumverbindung zusammengebracht und vermischt und dazu die aluminiumorganische Verbindung (D) in Anwesenheit eines inerten Lösungsmittels zugesetzt und umgesetzt und danach eine Titanverbindung zugesetzt und von dem so erhaltenen Reaktionsgemisch die feste Katalysatorzusammensetzung abgetrennt worden ist.

9. Verfahren zum Herstellen von Olefinpolymer nach einem der Ansprüche 1 bis 6, dadurch gekennzeichnet, daß die feste Katalysatorzusammensetzung erhalten worden ist durch Umsetzung einer Titanverbindung, einer Vanadiumverbindung, der Zirkonium- oder Hafniumverbindung und der aluminiumorganischen Verbindung (D) in solchen Mengen, daß die Bedingung $u/t>0,6$ erfüllt ist, wobei u die in Grammäquivalenten ausgedrückte Gesamtmenge der in der Titanverbindung, der Vanadiumverbindung, der Zirkon- oder Hafniumverbindung und der aluminiumorganischen Verbindung enthaltenen Halogenatome und t die in Grammäquivalenten ausgedrückte Gesamtmenge der in der Titanverbindung, der Vanadiumverbindung und der Zirkonium- oder Hafniumverbindung enthaltenen Metallatome ist.

10. Verfahren zum Herstellen von Olefinpolymer nach einem der Ansprüche 1 bis 6, dadurch gekennzeichnet, daß die feste Katalysatorzusammensetzung erhalten worden ist durch Umsetzung einer Titanverbindung, einer Vanadiumverbindung, der Zirkonium- oder Hafniumverbindung und der aluminiumorganischen Verbindung (D) in solchen Mengen, daß die Bedingungen $0,1<(Zr$ oder $Hf)/Ti<10$ und $0,01<(Zr$ oder $Hf+Ti)V<100$ erfüllt sind, wobei Ti, V und Zr oder Hf die in Grammäquivalenten ausgedrückten Mengen der in den jeweiligen Verbindungen enthaltenen Titanatome, Vanadiumatome und Zirkonium- oder Hafniumatome sind.

11. Verfahren zum Herstellen von Olefinpolymer nach einem der Ansprüche 1 bis 6, dadurch gekennzeichnet, daß ein Olefin in Anwesenheit von Wasserstoff polymerisiert wird.

12. Verfahren zum Herstellen von Olefinpolymer, dadurch gekennzeichnet, daß ein Olefin unter Verwendung eines Katalysators polymerisiert wird, der in Kombination eine feste Katalysatorzusammensetzung enthält, die erhalten worden ist durch Umsetzung:

(A) einer Titanverbindung, die ausgewählt ist aus den halogenhaltigen und den organischen sauerstoffhaltigen Verbindungen des Titans,
(B) einer Vanadiumverbindung, die ausgewählt ist aus den halogenhaltigen und den organischen sauerstoffhaltigen Verbindungen des Vanadiums,
(C) einer Hafniumverbindung, die ausgewählt ist aus den halogenhaltigen Verbindungen und den organischen sauerstoffhaltigen Verbindungen des Hafniums, und
(D) eines aluminiumorganischen Bromids, sowie eine aluminiumorganische Verbindung.

13. Verfahren zum Herstellen von Olefinpolymer nach einem der Ansprüche 1 bis 6 und 12, dadurch gekennzeichnet, daß die feste Katalysatorzusammensetzung erhalten worden ist durch

Umsetzung einer Titanverbindung, einer Vanadiumverbindung, der Zirkonium- oder Hafniumverbindung und einer aluminiumorganischen Verbindung und Abtrennung der festen Katalysatorzusammensetzung von dem Reaktionsgemisch.

**Revendications**

1. Procédé de préparation d'un polymère d'oléfines ayant une distribution de poids moléculaire large et pouvant être controlée, caractérisé en ce qu'on polymèrise une oléfine en utilisant un catalyseur comprenant, en combinaison, un composé organo-aluminium et une composition catalytique solide, obtenu en faisant reagir:

a) un composé de titane choisi parmi les composés organiques de titane oxygènés et halogènés
b) un composé de vanadium choisi parmi les composés organiques de vanadium oxygènés et halogènés
c) un composé d'hafnium choisi parmi les composés organiques oxygènés d'hafnium et les composés halogènés d'hafnium
d) un composé organo-aluminium.

2. Procédé selon la revendication 1, caractérise en ce que le composé (c) contient également un composé de zirconium choisi parmi les composés organiques oxygènés de zirconium et les composés halogènés de zirconium.

3. Procédé pour la préparation d'un polymère d'oléfines ayant une distribution de poids moléculaire large et pouvant être controlée, caractérisé en ce qu'on polymèrise une oléfine en utilisant un catalyseur comprenant, en combinaison, un composé organo-aluminium et une composition catalytique solide, obtenue en faisant reagir:

a) un composé de titane choisi parmi les composés organiques de titane oxygènés et halogènés
b) un composé de vanadium choisi parmi les composés organiques de vanadium oxygènés et halogènés
c) un composé de zirconium choisi parmi les composés organiques de zirconium oxygènés et halogènés
d) un bromure d'organo-aluminium.

4. Procédé de préparation d'un polymère d'oléfines selon l'une quelconque des revendications 1 et 2, dans lequel le composé organoaluminium (d) est choisi parmi les composés organo-aluminium représentés par la formule générale: $AlR^9_nX^9_{3-n}$ (dans laquelle $R^9$ est un groupe hydrocarbone ayant de 1 à 20 atomes de carbone, X est un atome d'halogène, et n est un nombre defini par $0<n\leqq3$).

5. Procédé de préparation d'un polymère d'oléfines selon l'une quelconque des revendications 1, 2 et 4, dans lequel le composé organo-aluminium est un composé de bromure d'organo-aluminium.

6. Procédé de préparation d'un polymère d'oléfines selon l'une quelconque des revendications précédentes, dans lequel le composé organo-aluminium est choisi parmi les composés de bromure d'organoaluminium représentés par la formule générale: $AlR^{10}_mBr_{3-m}$ (dans laquelle $R^{10}$ est un groupe hydrocarbone ayant de 1 à 20 atomes de carbone, et m est un nombre defini par $0<m<3$).

7. Procédé de préparation d'un polymère d'oléfines selon l'une quelconque des revendications 1 à 6, dans lequel la composition catalytique solide est préparée en agitant et en faisant réagir le composé organo-aluminium avec un matériau liquide obtenu en mélangeant ou en faisant réagir un composé de titane, un composé de vanadium et le composé de zirconium ou d'hafnium en présence ou en l'absence d'un diluant et en séparant la composition catalytique solide de mélange réactionnel résultant.

8. Procédé de préparation d'un polymère d'oléfines selon l'une quelconque des revendications 1 à 6, dans lequel la composition catalytique solide est préparée en ajoutant et en mélangeant un composé de vanadium et le composé de zirconium ou d'hafnium, en y additionnant en outre le composé organo-aluminium (d) en présence d'un solvent inerte pour les faire réagir, suivi de l'addition d'un composé de titane et en séparant la composition catalytique solide du mélange réactionnel résultant.

9. Procédé de préparation d'un polymère d'oléfines selon l'une quelconque des revendications 1 à 6, dans lequel la composition catalytique solide est obtenue en faisant reagir un composé de titane, un composé de vanadium, le composé d'hafnium ou de sirconium et le composé d'organo-aluminium (d) dans des quantités telles qu'ils répondent aux conditions de: $u/t>0.6$ (dans lequel u est la somme totale, exprimée en termes d'équivalents grammes, d'atomes d'halogène dans les composés de titane, de vanadium, de zirconium ou d'hafnium et d'organo-aluminium et t est la somme totale, exprimée en termes d'équivalents grammes, des atomes de métal dans les composés de titane, de vanadium, de zirconium ou d'hafnium).

10. Procédé de préparation d'un polymère d'oléfines selon l'une quelconque des revendications 1 à 6, dans lequel la composition catalytique solide est obtenue en faisant reagir un composé de titane, un composé de vanadium, le composé de zirconium ou d'hafnium et un composé d'organo-aluminium (d) en les utilisant en quantités telles qu'ils répondent aux conditions de: $0.1<(Zr\ ou\ Hf)/Ti<10$ et $0.01<(Zr\ ou\ Hf+Ti)/V<100$ (dans lesquels Ti, V et Zr ou Hf représentant les quantités des atomes de titane, de vanadium, de zirconium ou d'hafnium dans les composés respectivement exprimés en termes d'équivalents grammes).

11. Procédé de préparation d'un polymère d'oléfines selon l'une quelconque des revendications 1 à 6, dans lequel on polymèrise une oléfine en présence d'hydrogène.

12. Procédé de préparation d'un polymère d'oléfines selon l'une quelconque des revendications 1 à 6, caractérise en ce qu'on polymèrise une oléfine un utilisant un catalyseur comprenant en combinaison une composition catalytiquée solide obtenue en faisant reagir:

a) un composé de titane choisi parmi les composés halogènés et les composés organiques oxygènés de titane
b) un composé de vanadium choisi parmi les composés halogènés et les composés organiques oxygènés de vanadium
c) un composé d'hafnium choisi parmi les composés halogènés et les composés organiques oxygènés d'hafnium
d) un composé de bromure d'organo-aluminium et un composé organo-aluminium.

13. Procédé de préparation d'un polymère d'oléfines selon l'une quelconque des revendications 1 à 6 et 12, dans lequel la composition catalytique solide est obtenue en faisant reagir un composé de titane, un composé de vanadium le composé de zirconium ou d'hafnium et un composé organo-aluminium et en séparant la composition catalytiquée solide du mélange réactionnel.